# EUROPEAN PATENT APPLICATION

(11) **EP 3 037 994 A1**
(43) Date of publication of application: **29.06.2016**
(21) Application number: 14837941.5
(22) Date of filing: 25.08.2014
(51) Int. Cl.: G06F 19/00, G01N 21/88

(54) **SUBSTRATE INSPECTION APPARATUS**

(30) Priority: 23.08.2013 KR 20130100368
(71) Applicant: Koh Young Technology Inc., Geumcheon-gu Seoul 153-706 (KR)
(72) Inventor: HONG, Deok-Hwa, Gwangmyeong-si Gyeonggi-do 423-732 (KR); KUM, Jeong-Joo, Yongin-si Gyeonggi-do 446-724 (KR); SONG, Seung-Ho, Seoul 120-784 (KR)
(74) Representative: Zardi, Marco
(86) International application number: PCT/KR2014/007877
(87) International publication number: WO 2015/026211

(57) **Abstract**

The present invention relates to a substrate inspecting apparatus which is capable of reducing an inspection time of a substrate having a plurality of inspection regions and improving convenience of a user. The substrate inspecting apparatus according to an embodiment of the present invention includes an inspection unit inspecting inspection regions of a substrate according to an inspection sequence to obtain image data of the inspection regions, a control unit comprising a plurality of data processing parts processing the image data of the inspection regions, which is transmitted by the inspection unit, and an optimization module optimizing the inspection sequence of the inspection regions and a data processing sequence of the data processing parts, and a user interface displaying an optimization-oriented information relating the inspection sequence and the data processing sequence optimized by the optimization module.

## Description

### [Invention Title]

### SUBSTRATE INSPECTING APPARAUS

### [Technical Field]

The present invention relates to a substrate inspecting apparatus, and more particularly a substrate inspecting apparatus which is capable of reducing an inspection time of a substrate having a plurality of inspection regions and improving convenience of a user.

### [Background Art]

In general, a process for inspecting a printed circuit board (PCB) is performed before and after mounting an electronic device on the PCB in order to check a reliability of a PCB with the electronic device mounted thereon. For example, a SPI process and an AOI process are performed before and after mounting an electronic device, respectively. Through the SPI process, the application state of solder applied to a pad region of the PCB can be inspected before mounting an electronic device on the PCB, and through the AOI process, the mounting state of the electronic device can be inspected after mounting the electronic device on the PCB.

The process of inspecting a PCB can be performed through a substrate inspecting apparatus including an illumination part irradiating light onto a substrate, and an inspection unit having a camera capturing an image of the substrate to get image data. Recently, a 3-dimensional substrate inspecting apparatus has been developed, which is capable of improving an inspection reliability of a PCB by irradiating a grid pattern light to get 3-dimensional information of the PCB.

On the other hand, a field of view (FOV) of a camera is limited. Therefore, a large PCB is divided into a plurality of inspection regions to be inspected. As a result, an inspection time increases since the inspection unit is moved to each of the inspection regions to inspect the inspection regions.

### [Disclosure]

### [Technical Problem]

Therefore, the technical problem of the present invention is to provide a substrate inspecting apparatus capable of reducing an inspection time of a PCB and improving convenience of a user.

### [Technical Solution]

A substrate inspecting apparatus according to an embodiment of the present invention includes an inspection unit inspecting inspection regions of a substrate according to an inspection sequence to obtain image data of the inspection regions, a control unit comprising a plurality of data processing parts processing the image data of the inspection regions, which is transmitted by the inspection unit, and an optimization module optimizing the inspection sequence of the inspection regions and a data processing sequence of the data processing parts, and a user interface displaying an optimization-oriented information relating the inspection sequence and the data processing sequence optimized by the optimization module.

The optimization module optimizes the inspection sequence of the inspection regions and the data processing sequence of the data processing parts, considering at least one of a moving time of the inspection unit and a data processing time of the inspection regions.

The user interface may include an inspection region sequence chart section displaying the data processing sequence through which the data processing parts process the image data of the inspection regions, which are obtained by the inspection sequence optimized by the optimization module.

The inspection region sequence chart section displays a time as an X-axis and an order of the data processing parts as a Y-axis, and displays a data processing order of the image data of the inspection regions as an inspection region block having a bar shape of which length corresponds to a data processing time.

The inspection region sequence chart section may display a moving time block that shows a moving time of the inspection unit in front of the inspection region block according to a request of a user.

The user interface may further include a bar chart section displaying all of the inspection regions on the substrate in an inspection region block shape arranged along a line through the inspection sequence.

The user interface may further include a substrate image display section displaying an image of the substrate including the inspection regions. The substrate image display section may highlight and display an inspection region that is selected among the inspection regions by a user.

The user interface may further include a characteristic displaying section comprising at least one of an algorithm display part displaying a result data of performing at least one optimization algorithm, a parameter display part displaying hardware parameters, an optimization performing part for performing a path optimization, a simulation performing part for performing simulation, and an inspection region information displaying part displaying information of the inspection region selected by a user in detail.

### [Advantageous Effects]

According to the substrate inspecting apparatus, inspection time of the substrate can be reduced by optimizing the inspection sequence of the inspection regions and the data processing sequence of the data processing parts, considering the moving time of the inspection unit and data processing time of the inspection regions.

Further, the convenience of a user in inspection process may be enhanced by providing the optimization-oriented information relating the inspection sequence of the inspection region, which is optimized by the optimization module, and the data processing sequence of the data processing parts through a user interface.

### [Description of Drawings]

FIG.1 is a figure roughly showing a substrate inspection apparatus according to an exemplary embodiment of the present invention.
FIG. 2 is a figure showing a display screen of a user interface according to an exemplary embodiment of the present invention.
FIG. 3 is a figure showing an inspection region sequence chart section in FIG. 2.
FIG. 4 is an enlarged view showing 'A' region in FIG. 3.
FIG. 5 is a figure showing a bar chart section in FIG. 2.
FIG. 6 is a figure showing a substrate image display section in FIG. 2.
FIG. 7 is a figure showing a highlight function of the substrate image display section in FIG. 6.
FIG. 8 is a figure showing a characteristic displaying section in FIG. 2.

### [Mode for Invention]

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that, although the terms first, second, third etc. may be used herein to describe various elements, components, regions, layers and/or sections, these elements, components, and/or sections should not be limited by these terms. These terms are only used to distinguish one element, component, region, layer or section from another region, layer or section. Thus, a first element, component, or section discussed below could be termed a second element, component, or section without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, with reference to the drawings, preferred embodiments of the present invention will be described in detail.

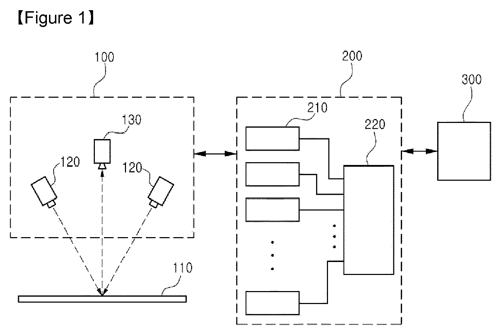

FIG.1 is a figure roughly showing a substrate inspection apparatus according to an exemplary embodiment of the present invention.

Referring to FIG. 1, a substrate inspecting apparatus according to an exemplary embodiment of the present invention includes an inspection unit 100, a control unit 200 and a user interface 300.

The inspection unit 100 inspects inspection regions of a substrate 110 in sequence according to an inspection sequence to get image data of each of the inspection regions.

The inspection unit 100 includes, for example, at least one irradiation part 120 for irradiating a grid pattern light onto the substrate 110, and at least one camera 130 capturing an image reflected by the substrate 110 when the grid pattern light is irradiated thereonto.

The irradiation part 120 irradiates a grid pattern light for obtaining 3-dimensional information such as height information, visibility information, etc. onto the substrate 110 in order to inspect a mounting state of an electronic device mounted on the substrate 110. For example, the irradiation part 120 may include a light source generating light, a grid pattern device transforming the light generated by the light source into a grid pattern light, a projection lens projecting the grid pattern light transformed by the grid pattern device onto the substrate 110, etc. The grid pattern device may move grid pattern by a grid pattern moving device such as a piezo actuator (PZT) by 2/n, (n-1)-times for phase shift of the grid pattern light, wherein 'n' is a natural number no less than two. On the other hand, the grid pattern device may be embodied through a liquid crystal display that needs no physical moving. A plurality of the irradiation parts 120 may be arranged along a circumference with a center at which the camera 130 is disposed, in order to improve accuracy of inspection.

The camera 130 captures an image of the substrate 110 when the grid pattern light is irradiated thereonto. For example, the camera 130 may be installed vertically over the substrate 110. The camera 130 may be a global shutter type camera using a CCD sensor. The global shutter type camera 130 captures an image within a field of vision as a snap shot to obtain image data at one time. Alternatively, the camera 130 may be a rollering shutter type camera using a CMOS sensor. The rollering shutter type camera 130 scans pixels arranged in two dimension, line by line to get image data.

On the other hand, the inspection unit 100 may further include a illumination part (not shown) for capturing a 2-dimensional image of the substrate 110. The illumination part is a lighting for an initial alignment or setting an inspection region. The illumination part may be formed in a ring-shape to apply monochromatic light onto the substrate 110 more than one color. For example, the illumination part may include a fluorescent lamp generating white light, or a red LED, a green LED, a blue LED generating red light, green light, blue light, respectively.

The inspection unit 100 with the above described structure irradiates light onto the substrate 110 by using the irradiation part 120 or the illumination part, and captures an image of the substrate 110 by the camera 130 to obtain image data of the substrate 110 with electronic device mounted thereon.

On the other hand, since the camera 130 has a limited field of view (FOV), a large substrate 110 may be divided into a plurality of inspection regions, each of which corresponds to FOV in order to inspect the large substrate 110. Therefore, the inspection regions are inspected one by one in an inspection sequence to get image data of each inspection region.

The control unit 200 includes a plurality of data processing parts 210 processing image data of the inspection regions, which is received from the inspection unit 100, and an optimization module 220 for setting an optimized inspection sequence regarding to the inspection regions.

The data processing part 210 processes the image data of inspection regions, which is transmitted by the inspection unit 100, to obtain 3-dimensinal information having height information or 2-dimensional information of the substrate 110, and inspects mounting status of an electronic device by using the 3-dimensinal information or the 2-dimensional information.

The optimization module 220 optimizes the inspection sequence of the inspection regions of the substrate 110, by using a specific algorithm. Further, the optimization module 220 optimizes data processing sequence regarding to plurality of data processing parts 210 by using a specific algorithm.

For example, considering the moving time of the inspection unit 100 among inspection regions, and the data processing time of the image data of the inspection regions, the optimization module 220 optimizes the inspection sequence of the inspection regions and/or the data processing sequence of the data processing parts 210. That is, since the moving time of the inspection unit 100 may be changed according to separation distance among the inspection regions and the data processing time may be changed according to amount of data of the inspection regions, the inspection time of the substrate 110 may be reduced by optimizing the inspection sequence of the inspection regions and the data processing sequence of the data processing parts 210, considering the moving time of the inspection unit 100 and the data processing time of the data processing parts 210.

The user interface 300 receives various input information from a user and displays various inspection information to a user through the inspection unit 100 and the control unit 200 throughout all inspection process of the substrate 110. Especially, the user interface 300 displays optimization-oriented information that relates to the inspection sequence of the inspection regions and the data processing sequence of the data processing parts 210, which are performed by the optimization module 220.

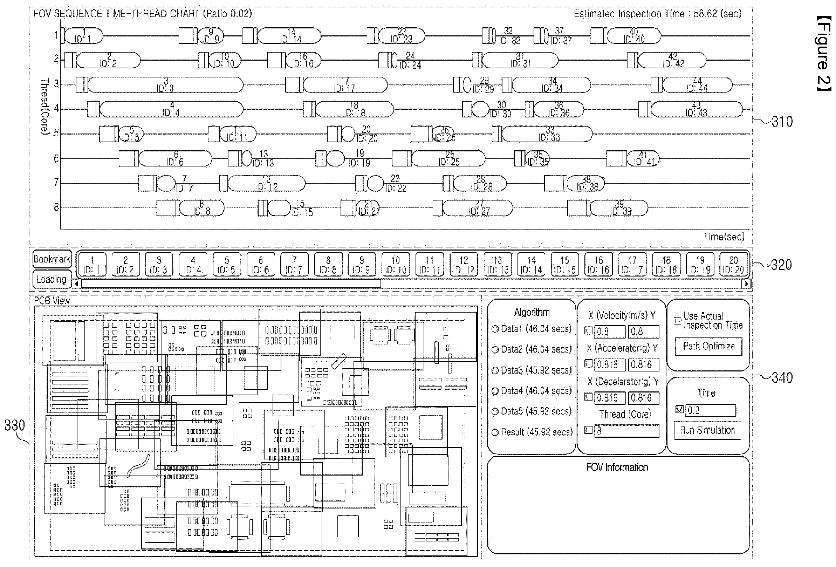

FIG. 2 is a figure showing a display screen of a user interface according to an exemplary embodiment of the present invention.

Referring to FIG. 1 and FIG. 2, according to an optimization work request of a user, the user interface 300 displays an inspection region sequence chart section 310, a bar chart section 320, a substrate image display section 330, a characteristic displaying section 340, etc. on a display screen. For example, the inspection region sequence chart section 310 may be disposed in an upper portion of the display screen, the bar chart section 320 is disposed under the inspection region sequence chart section 310, and the substrate image display section 330 and the characteristic displaying section 340 are disposed under the bar chart section 320. On the other hand, positions of the inspection region sequence chart section 310, the bar chart section 320, the substrate image display section 330 and the characteristic displaying section 340 are not limited by the above description but may be variously changed according to convenience of a user.

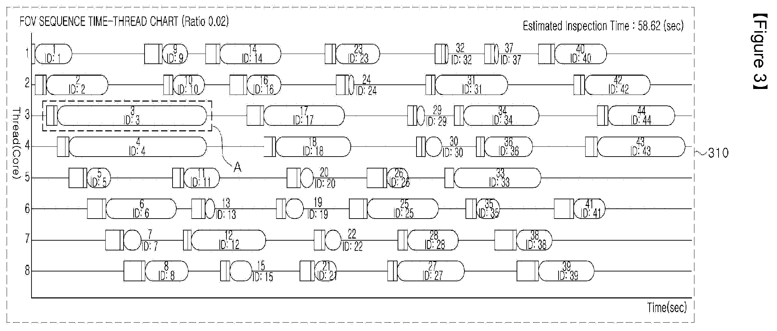

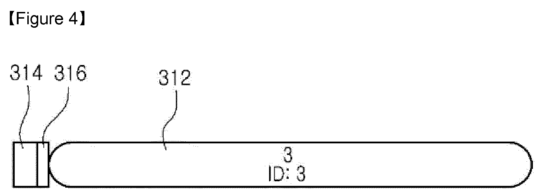

FIG. 3 is a figure showing an inspection region sequence chart section in FIG. 2, and FIG. 4 is an enlarged view showing 'A' region in FIG. 3.

Referring to FIG. 3 and FIG. 4, the inspection region sequence chart section 310 displays the data processing sequence of the plurality of data processing parts 210 as a chart. That is, the inspection region sequence chart section 310 sequentially arranges and displays the data processing sequence according to which the data processing parts 210 processes the image data of the inspection regions sequentially obtained as the sequence optimized by the optimization module 220.

The inspection region sequence chart section 310 displays a time as an X-axis, and an order of the data processing parts 210 as a Y-axis. The inspection region sequence chart section 310 displays a data processing order of the image data of the inspection regions as an inspection region block 312 having a bar shape of which length corresponds to a data processing time. Since the amount of data of the inspection regions, which is to be processed, is different from each other to make the data processing time different from each other, the processing time blocks 312 may be displayed to have different length according to the data processing time of the inspection regions.

The inspection region sequence chart section 310 displays a moving time block 314 that shows a moving time of the inspection unit 100 in front of the inspection region block 312. Since the distance between the inspection regions may be different from each other, the moving time block 314 may have a different length from each other in accordance with the moving distance of the inspection unit 100 between the inspection regions.

Additionally, the inspection region sequence chart section 310 may display a grab time block 316 that shows a grab time of the inspection unit 100 between the inspection region block 312 and the moving time block 314.

Therefore, the total processing time of each of the inspection regions becomes a sum of the moving time, grab time and data processing time of the inspection unit 100.

The optimization module 220 sets the data processing order of the data processing parts 210, considering the total processing time of each of the inspection regions. That is, in assigning image data of the inspection regions, which is transmitted by the inspection unit 100, to the plurality of data processing parts 210, the optimization module 220 sets the data processing order by firstly assigning the image data of the inspection region to a data processing part 210 that is idle at present. For example, as shown in FIG. 3, in assigning image data of eleventh inspection region, the third and the fourth data processing parts still processes data, the image data of the eleventh inspection region is assigned to the fifth data processing part, which already finishes data processing. As described above, the present invention can reduce total substrate inspection time by setting data processing order in consideration of the data processing status of the data processing parts 210.

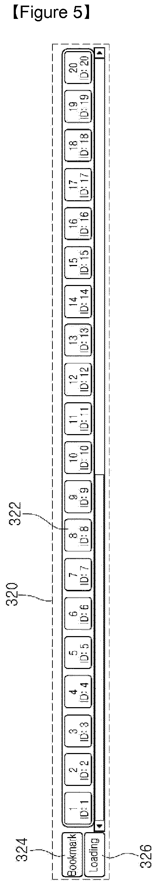

FIG. 5 is a figure showing a bar chart section in FIG. 2.

Referring to FIG. 5, the bar chart section 320 displays total inspection regions included in the substrate 110 as inspection region blocks 322 with rounded corner, which are arranged according to the inspection sequence.

The bar chart section 320 may display the plurality of inspection region blocks 322 by grouping them. When there exists no group, the bar chart section 320 displays the total inspection regions 322 as one group. Further, the bar chart section 320 may display the inspection region block 322 according to a status. Further, the bar chart section 320 may include an inspection region moving function moving the inspection regions, which is performed by a context menu type or a drag-and-drop type.

The bar chart section 320 may include a book mark button 324 for storing the status of the inspection region blocks 322 such as the sequence, grouping, etc. as a book mark. Additionally, the bar chart section 320 may include a loading button 326 for loading required status of the inspection region blocks 322 from the stored book mark.

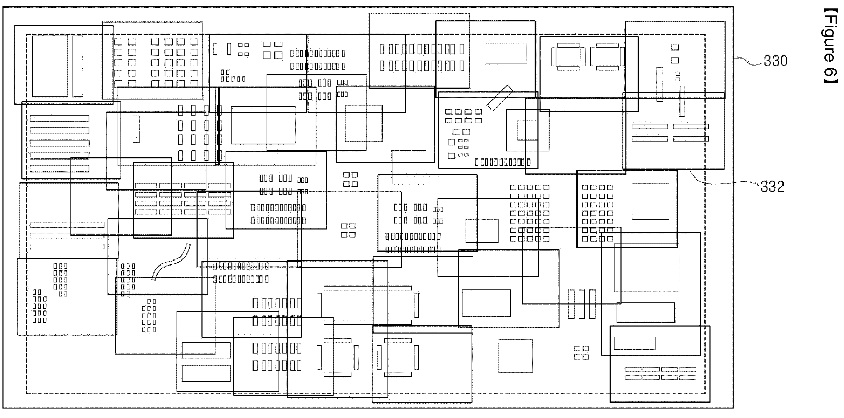

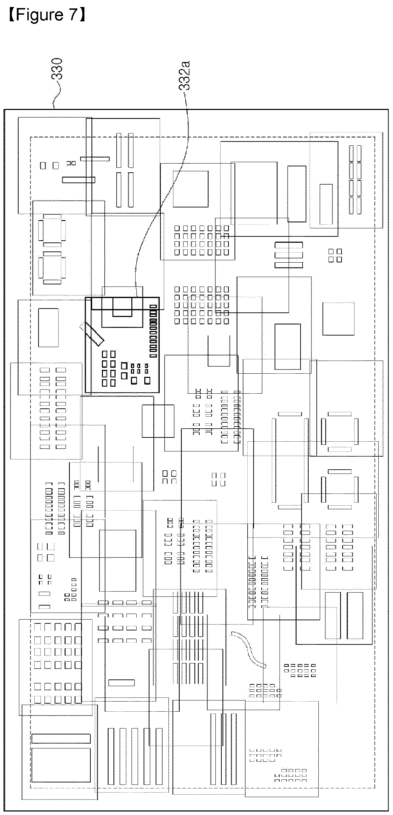

FIG. 6 is a figure showing a substrate image display section in FIG. 2, and FIG. 7 is a figure showing a highlight function of the substrate image display section in FIG. 6.

Referring to FIG. 6 and FIG. 7, the substrate image display section 330 displays an image of the substrate 110 that is inspected at present.

The size of the substrate image displayed on the substrate image display section 330 is adjusted according to the size of the substrate image display section 330, and the substrate image is displayed while maintain the height to width ratio of the substrate 110.

The substrate image display section 330 also shows the plurality of inspection regions 332 in which the inspection will be performed. The inspection region 332 under inspection now may be differently display from other inspection regions 332.

The substrate image display section 330 may highlight the inspection region under inspection now or an inspection region 332a which is chosen by a user to display it. For example, other inspection region except the inspection region under inspection now or the inspection region 332a which is chosen by a user may be displayed translucently to highlight the selected inspection region 332a.

Further, the substrate image display section 330 extend or contract the substrate image and the inspection region 332 by mouse controlling to show them. Furthermore, the substrate image display section 330 may move the substrate image and the inspection region 332 by mouse dragging to show them.

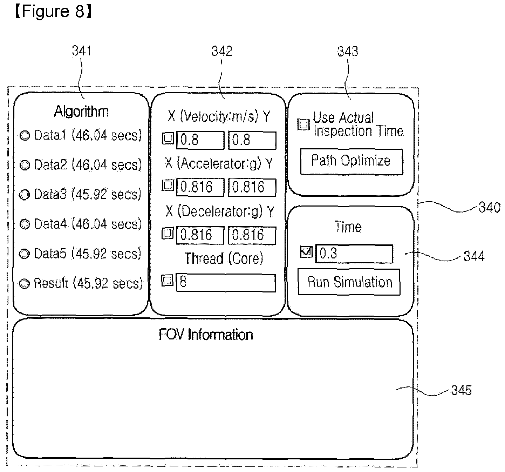

FIG. 8 is a figure showing a characteristic displaying section in FIG. 2.

Referring to FIG. 8, the characteristic displaying section 340 may include an algorithm display part 341, a parameter display part 342, an optimization performing part 343, a simulation performing part 344, an inspection region information displaying part 345, etc.

The algorithm display part 341 displays a result data of performing at least one of the optimized algorithms. The result data mean a total time required for inspecting the total inspection regions of the substrate 110 through the at least one of the optimized algorithms. The algorithm display part 341 is inactivated before the path optimization is performed. The algorithm display part 341 individually activates articles showing the path optimization result after performing the path optimization result to display them. When all of path optimization algorithm are performed, the algorithm display part 341 shows a minimum time as a 'Result'.

The parameter display part 342 is region for setting and displaying parameters of a hardware relating the inspection unit 100, the data processing part 210, etc. For example, the parameter display part 342 shows a velocity, an acceleration, a deceleration, a number of the data processing parts 210, etc.

The parameter display part 342 may be activated or inactivated according to a login authority. For example, the parameter display part 342 may be activated to allow edit when a manufacturer logins, and inactivated to ban edit when a user logins.

The optimization performing part 343 is a region including a path optimization button for performing the path optimization. When the check box of 'use actual inspection time' in the optimization performing part 343 is checked, the optimization is performed by real inspection time information value.

When the path optimization button in the optimization performing part 343 is clicked, the path optimization is performed, and an optimization dialog displaying performing status per algorithm is displayed. In this case, temporary suspension, restart, cancellation, closing, etc. may be performed according to the status of the path optimization. When the path optimization is completed, a result data is updated to be displayed in the algorithm display part 341, and the minimum time value is displayed as the 'Result'. When a user selects one of the result data after the result data is updated, inspection region information of the present module is updated as the selected result data, and the inspection region sequence chart section 310 is updated to be displayed.

The simulation performing part 344 is a region including a simulation performing button for performing simulation of path optimization. The simulation performing part 344 includes an input window for setting simulation time.

When the simulation time is inputted and the simulation performing button is clicked in the simulation performing part 344, the simulations regarding the inspection regions are sequentially performed according to the optimization path that is presently set. When the simulation is performed, a dialog showing a performing status of the simulation is displayed. In this case, temporary suspension, restart, cancellation, closing, etc. may be performed according to the status of performing the simulation. Further, in performing the simulation, the inspection region under simulation now may be highlighted to be displayed in the inspection region sequence chart section 310, the bar chart section 320, the substrate image display section 330, etc.

The inspection region information displaying part 345 shows the information of the region selected by a user in detail. For example, when a user selects an inspection region in the inspection region sequence chart section 310 or the bar chart section 320, the inspection region information displaying part 345 shows information such as an inspection region ID, inspection region coordinates, an image capturing time, a performing time, the number of components, etc. regarding to the selected inspection region. Further, when a user selects an algorithm in the algorithm display part 341, inspection region information displaying part 345 shows information of the selected algorithm in detail. When a user selects a plurality of inspection regions, the information of the selected inspection regions are displayed in order, and may be vertically scrolled.

As described above, according to the present invention, the convenience of a user in inspection process may be enhanced by providing the optimization-oriented information relating the inspection sequence of the inspection region, which is optimized by the optimization module, and the data processing sequence of the data processing parts through a user interface.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A substrate inspecting apparatus comprising:
an inspection unit inspecting inspection regions of a substrate according to an inspection sequence to obtain image data of the inspection regions;
a control unit comprising a plurality of data processing parts processing the image data of the inspection regions, which is transmitted by the inspection unit, and an optimization module optimizing the inspection sequence of the inspection regions and a data processing sequence of the data processing parts; and
a user interface displaying an optimization-oriented information relating the inspection sequence and the data processing sequence optimized by the optimization module.

2. The substrate inspecting apparatus of claim 1, wherein the optimization module optimizes the inspection sequence of the inspection regions and the data processing sequence of the data processing parts, considering at least one of a moving time of the inspection unit and a data processing time of the inspection regions.

3. The substrate inspecting apparatus of claim 1, wherein the user interface comprises an inspection region sequence chart section displaying the data processing sequence through which the data processing parts process the image data of the inspection regions, which are obtained by the inspection sequence optimized by the optimization module.

4. The substrate inspecting apparatus of claim 3, wherein the inspection region sequence chart section displays a time as an X-axis and an order of the data processing parts as a Y-axis, and displays a data processing order of the image data of the inspection regions as an inspection region block having a bar shape of which length corresponds to a data processing time.

5. The substrate inspecting apparatus of claim 4, wherein the inspection region sequence chart section displays a moving time block that shows a moving time of the inspection unit in front of the inspection region block according to a request of a user.

6. The substrate inspecting apparatus of claim 3, wherein the user interface further comprises a bar chart section displaying all of the inspection regions on the substrate in an inspection region block shape arranged along a line through the inspection sequence.

7. The substrate inspecting apparatus of claim 3, wherein the user interface further comprises a substrate image display section displaying an image of the substrate including the inspection regions.

8. The substrate inspecting apparatus of claim 7, wherein the substrate image display section highlights and displays an inspection region that is selected among the inspection regions by a user.

9. The substrate inspecting apparatus of claim 3, wherein the user interface further comprises a characteristic displaying section comprising at least one of an algorithm display part displaying a result data of performing at least one optimization algorithm, a parameter display part displaying hardware parameters, an optimization performing part for performing a path optimization, a simulation performing part for performing simulation, and an inspection region information displaying part displaying information of the inspection region selected by a user in detail.
